# EUROPÄISCHE PATENTSCHRIFT

(11) **EP 2 982 063 B1**
(45) Veröffentlichungstag und Bekanntmachung des Hinweises auf die Patenterteilung: **30.09.2020**
(21) Anmeldenummer: 14714697.1
(22) Anmeldetag: 01.04.2014
(51) Int. Cl.: G05B 19/05, G06F 1/14, H04W 56/00, H04J 3/06, H04L 12/40

(54) **AUTOMATISIERUNGSEINRICHTUNG UND VERFAHREN ZUR REDUZIERUNG VON JITTERN**
AUTOMATION DEVICE AND METHOD FOR REDUCING JITTER
DISPOSITIF D'AUTOMATISATION ET PROCÉDÉ PERMETTANT DE RÉDUIRE DES GIGUES

(30) Priorität: 05.04.2013 DE 102013005748
(43) Veröffentlichungstag der Anmeldung: 10.02.2016
(73) Patentinhaber: Phoenix Contact GmbH & Co. KG, 32825 Blomberg (DE)
(72) Erfinder: DETERT, Volker, 32278 Kirchlengern (DE); ROTTER, Christoph, 1090 Wien (AT)
(74) Vertreter: Bill, Burkart Hartmut
(86) Internationale Anmeldenummer: PCT/EP2014/056529
(87) Internationale Veröffentlichungsnummer: WO 2014/161854

(56) Entgegenhaltungen:
- DE-A1- 10 038 915
- DE-A1- 10 336 585
- DE-A1-102006 013 640

## Beschreibung

In der Automatisierungstechnik ist zu beobachten, dass Anforderungen an die Steuertechnik, wie z.B. eine SPS (Speicher-Programmierbare-Steuerung) ständig steigen. Immer kürzere Zykluszeiten werden sowohl für das SPS-Programm als auch für Echtzeit-Kommunikationssysteme gefordert, mit denen Prozessdaten an ein Feldbusgerät übertragen werden. Vermehrt werden Ethernet-basierte Systeme verwendet, die die bisher eingesetzten Feldbussysteme ablösen, wie beispielsweise die Bussysteme des Typs Interbus oder Profibus.

Automatisierungseinrichtungen weisen mehrere Ebenen der Kommunikation auf, wie beispielsweise einen Datenbus als eine Ebene, ein Kommunikationssystem als nächst höher gelegene Ebene, eine Applikationsebene darüber und ein Betriebssystem als höchste Ebene. Bei den heutigen Kommunikationssystemen wird häufig vorgesehen, eine Mehrzahl von Kommunikationsteilnehmern untereinander zu synchronisieren. Eine solche Kommunikation ist beispielsweise aus dem Dokument EP 2 110 754 A1 bekannt. Dort wird ein Verfahren zur Synchronisation von Busteilnehmern als Kommunikationsteilnehmer eines offenen Automatisierungssystems vorgeschlagen.

Eine Synchronisation von Kommunikationsteilnehmern kann beispielsweise nach dem Standard IEEE 1588 erfolgen, wobei oft eine Synchronisation in Form einer so genannten taktsynchronen Synchronisation verwendet wird. Bei einer taktsynchronen Synchronisation wird ein lokales Taktsystem oder mehrere lokale Taktsysteme der Kommunikationsteilnehmer aufeinander abgestimmt und somit synchronisiert. Dies bedeutet, dass nach einer Synchronisation alle Kommunikationsteilnehmer über eine gleiche Zeitbasis verfügen. Aus dieser Zeitbasis können weitere erforderliche Zeitpunkte für eine synchrone Kommunikation abgeleitet werden.

DE 103 36 585 A1 beschreibt ein Echtzeit-Interruptmodul für Betriebssysteme und zeitgetriggerte Anwendungen. Hierbei wird ein Zeitgeber-Modul vorgeschlagen zur Erzeugung von Interrupts für ein System mit einem Mikrocontroller, das einen Echzeit-Interrupt unter Verwendung eines dedizierten Echtzeit-Interrupt-Taksignals (RTICLK) zur Verfügung stellt.

DE 10 2006 013640 A1 beschreibt ein Verfahren zur Übergabe von Daten zwischen einem Datenübertragungssystem und einem Prozessor eines Teilnehmers des Datenübertragungssystems. Hierbei sind alle Komponenten des Datenübertragungssystems auf eine gemeinsame globale Zeitbasis synchronisiert. Ferner wird eine Betriebssystem-Zeitbasis des Teilnehmerprozessors auf die globale Zeitbasis des Datenübertragungssystems synchronisiert. Ferner wird ein Datenübertragungssystem zur Übergabe von Daten zwischen dem Datenübertragungssystem und einem Host-Prozessors eines Teilnehmers des Datenübertragungssystems vorgeschlagen. Hierbei wird ein Synchronisationstakt von einem Kommunikations-Controller bereitgestellt und über eine Synchronisationsleitung an den Host-Prozessor angelegt.

DE 100 38 915 A1 beschreibt ein Verfahren und eine Vorrichtung zur Erzeugung eines synchronen Verhaltens mehrerer Computer. Hierbei werden zu synchronisierende Aktuatoren der betreffenden Computer an je einem Zeitpunkt eines periodischen Zeitrasters mit konstanten und vorgeschriebenen Zeitintervallen ausgelöst. Das Zeitraster wird von einem Generator erzeugt, der über ein Signal, beispielsweise ein Funksignal, mit einer Referenzuhr gekoppelt ist und mit dieser synchron läuft. Auf diese Weise können computereigene Zeitmesser über einen Empfänger mit einem genormten Zeitmesser synchronisiert werden. Hierbei wird von den Zeitsignalen dieser Zeitmesser je ein auf die an dem betreffenden Aufstellungsort des Computers geltende Zeit bezogenes, periodisches Referenzssignal abgeleitet, von dessen Nulldurchgängen die zu synchronsisierenden Aktivitäten der betreffenden Computer abgeleitet werden. Zur Bereitstellung eines zeitsynchronen Betriebs wird ein Zeitraster-Signal zur Generierung eines Software-Interrupts verwendet, wobei der Software-Interrupt dann den betreffenden Aktuator, Aktivität und/oder Prozess startet oder beeinflusst. Somit ist die Verwendung eines Software-Interrupts zum Starten eines Aktuators, einer Aktivität und/oder eines Prozesses des betreffenden Computers aus der DE 100 38 915 A1 bereits bekannt.

Bei Automatisierungseinrichtungen mit synchronisierten Kommunikationsteilnehmern können Kollisionen in Bezug auf die Kommunikation auftreten. Eine Ursache hierfür können Anwendungen sein, auch Applikationen genannt, wie z.B. eine Bewegungssteuerung, auch Motion-Control genannt. Eine solche Bewegungssteuerung erfordert sowohl kurze Zykluszeiten der Applikation als auch kurze Zykluszeiten des Kommunikationssystems. Vorteilhafterweise werden zusätzlich beide Systeme, das Applikationssystem und das Kommunikationssystem, aufeinander synchronisiert. Fehlt eine solche Synchronisation, können vermehrt Jitter auftreten, die das Systemverhalten insgesamt verschlechtern können. Unter Jitter sind Störungen zu verstehen, die eine leichte Genauigkeitsschwankung im Übertragungstakt hervorrufen, wobei sich Jitter als ein zeitliches Taktzittern bei der Übertragung von Digitalsignalen bemerkbar macht. Trotz einer Synchronisation zwischen Applikationssystem und Kommunikationssystem können Jitter auftreten, da vorzugsweise bei einem Echtzeit-Betriebssystem in einer Automatisierungseinrichtung ein Interrupt verwendet wird, um eine solche Synchronisation herzustellen. Es kann dann vorkommen, dass sich Interrupts gegenseitig stören.

Es ist Aufgabe der vorliegenden Erfindung, eine verbesserte Automatisierungseinrichtung bereitzustellen, bei der das Auftreten von Jittern unter Verwendung von Interrupts weiter reduziert wird.

Die Aufgabe der Erfindung wird mit einer Automatisierungseinrichtung gemäß Patentanspruch 1 gelöst. Ferner wird die Aufgabe der Erfindung mit einem Verfahren zum Betreiben einer Automatisierungseinrichtung gemäß Patentanspruch 12 gelöst.

Eine zeitliche Synchronisation bedeutet, dass die beiden Systeme, das Betriebssystem und das Kommunikationssystem, aufeinander abgestimmt sind. Dies geschieht in zeitlich vordefinierten Zyklen, so dass Interrupts, die beispielsweise von dem Betriebssystem generiert werden und Interrupts, die von dem Kommunikationssystem generiert werden, sich nicht gegenseitig stören. Durch diese Vermeidung von Störungen werden wiederum Jitter vermindert. Unter einem Interrupt ist eine kurzfristige Unterbrechung der normalen Programmausführung zu verstehen, um eine andere, meist kurze, aber zeitkritische Verarbeitung durchzuführen. Ein Interrupt Request (IRQ) wird als eine Unterbrechungsanforderung verstanden, und ist das auslösende Ereignis für einen Interrupt. In den nachfolgenden Figuren werden Zeitpunkte eines Interrupt Requests (IRQ) dargestellt, durch den ein Interrupt hervorgerufen wird. Ein auf einen Interrupt Request zur Durchführung der anderen Verarbeitung folgendes Programm, wie beispielsweise ein SPS-Programm, kann als Interrupt Service verstanden werden.

Im Folgenden wird der bisherige Stand der Technik sowie der Erfindungsgedanke in den beigefügten Figuren erklärt. Hierbei zeigen:
- Fig. 1: eine Automatisierungseinrichtung mit einem unsynchronisierten Betriebssystemtakt nach dem Stand der Technik;
- Fig. 2: ein Ausführungsbeispiel einer Automatisierungseinrichtung gemäß der Erfindung mit einem synchronisierten Betriebssystemtakt;
- Fig. 3: ein Ausführungsbeispiel für eine Synchronisation zwischen einem Kommunikationssystem und einem Betriebssystem;
- Fig. 4: ein weiteres Ausführungsbeispiel zur Synchronisation zwischen einem Kommunikationssystem und einem Betriebssystem; und
- Fig. 5: ein weiteres Ausführungsbeispiel für eine Synchronisation zwischen einem Kommunikationssystem und einem Betriebssystem.

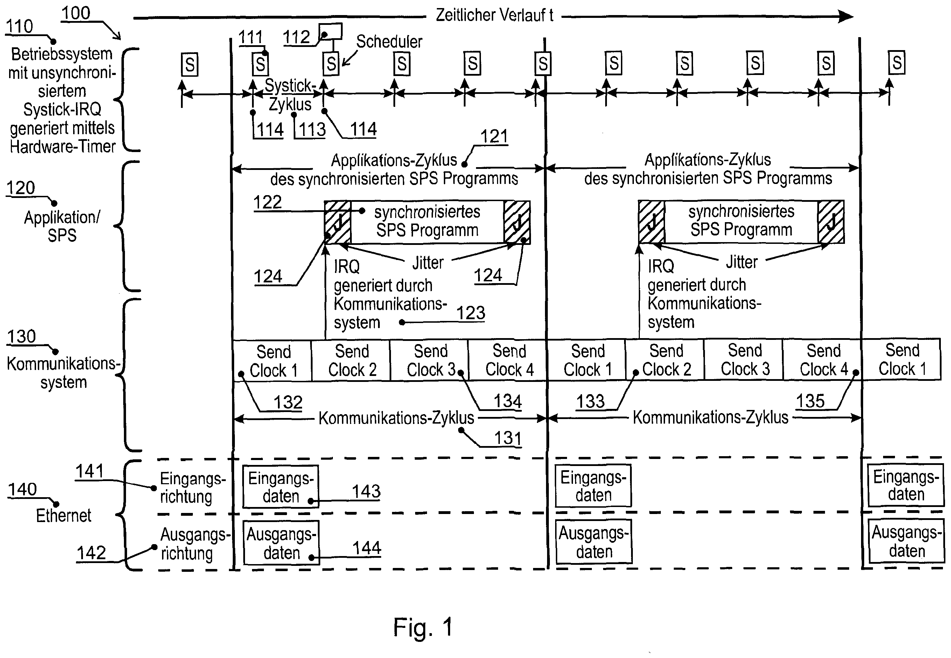

Fig. 1 zeigt ein Ausführungsbeispiel einer Automatisierungseinrichtung mit einem unsynchronisierten Betriebssystemtakt nach dem Stand der Technik. Die in Fig. 1 gezeigte Automatisierungseinrichtung 100 weist verschiedene Ebenen der Kommunikation auf. Die höchste Ebene bildet ein Betriebssystem 110. In einer darunter liegenden Ebene, der Applikationsebene 120, wird eine Anwendung oder Applikation 122 ausgeführt. Unterhalb der Applikationsebene 120 folgt ein Kommunikationssystem 130 und darunter ein Ethernet-Bus 140 mit einer Eingangsrichtung 141 und einer Ausgangsrichtung 142, wobei in Eingangsrichtung 141 Eingangsdaten 143 und in Ausgangsrichtung 142 Ausgangsdaten 144 übertragen werden.

In Fig. 1 findet ein nicht synchronisierter Betrieb zwischen dem Kommunikationssystem 130 und dem Betriebssystem 110 statt, wie es derzeit im Stand der Technik üblich ist. Ein Systemtakt und dazugehörige System-Interrupts des Betriebssystems 110 werden in einem Teil des Betriebssystems 110 mittels eines Schedulers 111 generiert, wobei der Scheduler 111 wiederum mit einem Hardware-Timer 112 verbunden ist. In Fig. 1 ist zu jedem Systemzyklus 113, auch Systick-Zyklus genannt, ein Scheduler 111 gezeigt, der schematisch wiederkehrend dargestellt ist, und der in Form von Software implementiert sein kann. Der Hardware-Timer 112 generiert einen Systemtakt, auch System-Tick genannt, so dass in regelmäßigen Abständen ein Interrupt 114 in der Betriebssystemebene 110 erzeugt werden kann und innerhalb des Betriebssystems 110 weiter verwendet werden kann. Der System-Tick-Zyklus 113 definiert den zeitlichen Abstand zwischen jeweils zwei Interrupts 114.

Jeder Betriebssystem-Aufruf führt zur Ausführung des Betriebssystem-Schedulers 111. Zusätzlich ist aber auch noch ein sogenannter System-Tick erforderlich, der die zyklische Ansteuerung des Schedulers 111 sicherstellt und damit auch die Zeitbasis eines Echtzeit-Betriebssystems darstellt. Dieser System-Tick wird gewöhnlich mit einem zyklischen Interrupt realisiert, der von einem Hardware-Timer bereitgestellt wird. Bei einer herkömmlichen Automatisierungseinrichtung 100 ist das Taktsystem, mit dem dieser Hardware-Timer 112 betrieben wird, nicht mit dem Taktsystem des Kommunikationssystems 130 synchronisiert. Die Takt-Systeme laufen somit unterschiedlich schnell und driften kontinuierlich gegeneinander.

Ferner zeigt Fig. 1 auf der Applikationsebene 120 einen Applikationszyklus 121, in dem das SPS-Programm 122 abgearbeitet wird. Dieses SPS-Programm 122 wird wiederum von einem Interrupt 123 gestartet, wobei der Interrupt 123 aus einem Systemtakt des Kommunikationssystems 130 generiert wird. In Fig. 1 weist ein Kommunikationszyklus 131 vier gleich lange Zeitblöcke 132, 133, 134, 135 auf, die jeweils einen oder mehrere Interrupts 123 generieren können. Insgesamt bilden die vier Zeitblöcke 132, 133, 134, 135 den Kommunikationszyklus 131.

In der Automatisierungseinrichtung 100 der Fig. 1 bedienen speicherprogrammierbare Steuerungen neben zeitkritischen Anwendungen, wie der Bewegungssteuerung, parallel noch weitere Anwendungen, die weniger zeitkritisch sind. Beispiele für weniger zeitkritische Anwendungen sind Visualisierungen, beispielsweise von Automatisierungsabläufen, oder Betriebsdatenerfassungen, beispielsweise zur Auswertung von Messwerten. Aufgrund der zeitkritischen Anwendungen wird innerhalb der Automatisierungseinrichtung 100 oftmals ein Betriebssystem 110 verwendet, das in Echtzeit arbeitet. Solche Echtzeit-Betriebssysteme 110 sind üblicherweise mit zusätzlichen Echtzeitfunktionen ausgestattet, die beispielsweise eine unbedingte Einhaltung von Zeitbedingungen und eine Vorhersagbarkeit von Prozessverhalten erlauben.

Bei bisher bekannten Echtzeit-Betriebssystemen 110 in Automatisierungseinrichtungen 100, wie in Fig. 1 beispielhaft dargestellt, wird der Interrupt (IRQ) 123 verwendet, um eine Synchronisation zwischen dem Kommunikationssystem 130 und der Applikation 122 herzustellen, beispielsweise dem SPS-Programm als Applikation 122. Dieser Interrupt 123 kann durch das Kommunikationssystem 130 generiert werden, wobei das Generieren beispielsweise auf dem Standard IEEE 1588 basiert. Ein solcher Interrupt 123 führt zur Ausführung eines sogenannten Interrupt-Service unter Kontrolle des Echtzeit-Betriebssystems 110. Durch diesen Interrupt-Service wird das SPS-Programm 122 zur Ausführung gebracht. Dabei kann das SPS-Programm 122 direkt in einem sogenannten Interrupt-Service-Thread bearbeitet werden oder durch einen Event-Mechanismus des Betriebssystems 110 zur Ausführung gebracht werden. Hierbei bekommt der Interrupt-Service-Thread eine entsprechend hohe Priorität innerhalb der Automatisierungseinrichtung 100, damit Zeitbedingungen eingehalten werden und eine Vorhersehbarkeit des Prozessverhaltens gewährleistet wird.

Durch das nicht synchronisierte Verhalten des Betriebssystems 110 in Bezug zum Kommunikationssystem 130 können jedoch Kommunikationskonflikte auftreten, da Interrupts 114 des Betriebssystems 110 mit höherer Priorität bearbeitet werden als Interrupts 123 des Kommunikationssystems 130. Die Ausführung von Interrupt Services wird jeweils durch einen Interrupt 114, 123 angestoßen und werden mit der Priorität des jeweiligen Interrupts abgearbeitet. Es existieren somit zwei unterschiedliche Taktsysteme, nämlich ein erster Systemtakt basierend auf dem System-Zyklus 113 des Betriebssystems 110 und ein zweiter Systemtakt basierend auf dem Kommunikationszyklus 131 des Kommunikationssystems 130, die miteinander nicht synchronisiert sind. Unter dem ersten Systemtakt wird der wiederkehrende Beginn von Systemzyklen 113 verstanden. Unter dem zweiten Systemtakt wird der wiederkehrende Beginn von Kommunikationszyklen 131 verstanden. Die beiden Taktsysteme laufen unterschiedlich schnell und driften kontinuierlich gegeneinander. Obwohl das SPS-Programm 122 mit Hilfe eines Interrupts, der durch das Kommunikationssystem 130 generiert wird, auf das Kommunikationssystem 130 synchronisiert ist, entstehen Jitter. Teile des Betriebssystems, und sei es auch nur der Scheduler 111, arbeiten mit einer höheren Priorität als der Interrupt-Service-Thread 123 und können daher den Interrupt-Service-Thread 123 verdrängen. Dies bewirkt, dass der Service-Thread verspätet gestartet oder unterbrochen wird. Dies geschieht, da aufgrund der fehlenden Synchronisation der Taktsysteme die Zeitpunkte zur Ausführung des Interrupt-Service-Threads 123 und des Betriebssystem-Schedulers 111 gelegentlich zusammen fallen. Ursache sind die gegeneinander driftenden Taktsysteme. Es ist folglich nur eine Frage der Zeit, wann Zeitpunkte zusammenfallen, bei denen ein Interrupt 114 des Betriebssystems 110 mit einem Interrupt 123 des Kommunikationssystems 130 in Konflikt geraten.

In Fig. 1 treten während des zeitlichen Ablaufs des SPS-Programms 122 Jitter 124 auf, die zu Beginn und am Ende des SPS-Programms 122 dargestellt sind. Diese Jitter 124 werden durch Kollisionen zwischen Interrupts 114 aus dem Betriebssystem 110 und Interrupts 123 aus dem Kommunikationssystem 130 generiert. Diese Jitter 124 sind unerwünscht und werden in Ausführungen gemäß der Erfindung gering gehalten oder sogar vermeiden.

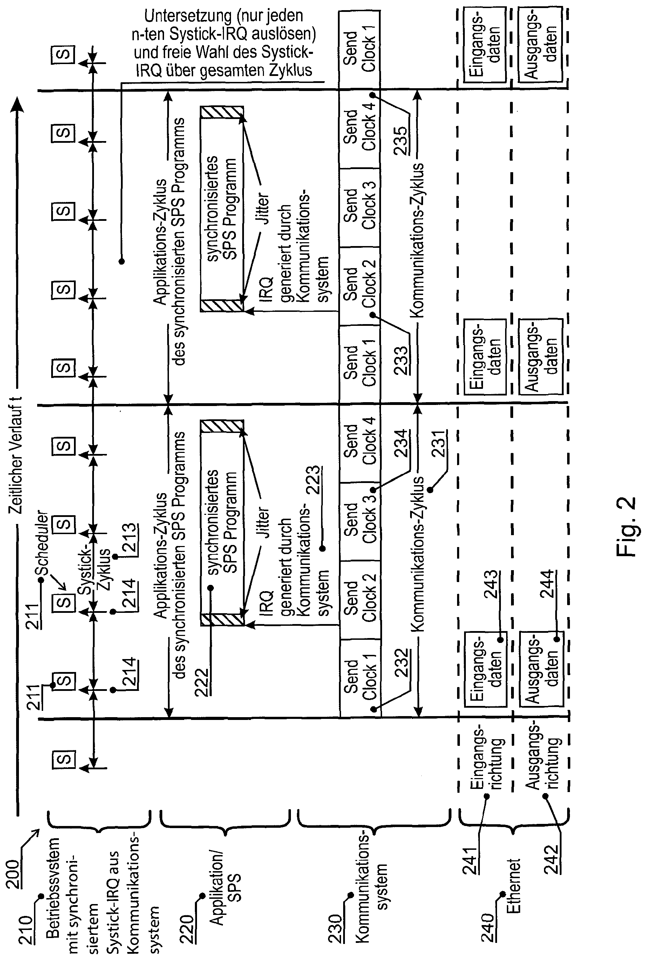

Fig. 2 zeigt, ähnlich wie Fig. 1, einen Aufbau einer Automatisierungseinrichtung 200 mit einem Betriebssystem 210, einer Applikationsebene 220, einem darunterliegenden Kommunikationssystem 230 und einem Ethernet-Bus 240 mit einer Eingangsrichtung 241 und einer Ausgangsrichtung 242, wobei in Eingangsrichtung 241 Eingangsdaten 243 und in Ausgangsrichtung 242 Ausgangsdaten 244 übertragen werden.

In Fig. 2 wird eine Automatisierungseinrichtung 200 bereitgestellt, die ein Betriebssystem 210 mit einem ersten Systemtakt und ein Kommunikationssystem 230 mit einem zweiten Systemtakt aufweist. Hierbei ist der erste Systemtakt zur Ansteuerung eines Systemzeitzyklus 213 des Betriebssystems 210 vorgesehen und der zweite Systemtakt zur Ansteuerung eines Systemzeitzyklus 231 des Kommunikationssystems 230 vorgesehen. Hierbei entspricht der Systemzeitzyklus 231 des Kommunikationssystems 230 einem Kommunikationszyklus 231 des Kommunikationssystems 230. Ferner sind der erste Systemtakt und der zweite Systemtakt zeitlich synchronisiert. In diesem Ausführungsbeispiel ist das Betriebssystem 210 ein Echtzeit-Betriebsystem. Dies bedeutet, dass auch eine oder mehrere zeitkritischen Anwendungen, wie eine Bewegungssteuerung oder eine SPS-Steuerung, mit der Automatisierungseinrichtung 200 betrieben werden können. Hierbei werden alle oder zumindest eine Vielzahl von Vorgängen quasi parallel (multi-tasking) durch das Echtzeit-Betriebssystem 210 ausgeführt. Dabei regelt das Echtzeit-Betriebssystem 210 die Verteilung der Betriebsmittel und löst auftretende Konflikte auf. Anwendungen 222 in der Applikationsebene 220 oder Anwendungsebene 220 können in Prozessen oder Threads durchgeführt werden werden, die entsprechend des geforderten Echtzeitverhaltens eine höhere oder niedrigere Priorität aufweisen. Dies gilt ebenso für das Betriebssystem 210. Gesteuert werden die Prozesse und Threads durch den Betriebssystem-Scheduler 211, der entscheidet welcher Thread oder Prozess als nächstes gestartet, weiterbearbeitet, unterbrochen oder beendet wird. Der Scheduler 211 selbst wird dazu vorteilhafterweise mit der höchsten Priorität betrieben, damit er seiner Aufgabe gerecht werden kann.

Es wird erfindungsgemäß das Taktsystem synchronisiert, aus dem der Betriebssystem-Systick 213 erzeugt wird, und zwar in diesem Ausführungsbeispiel der Fig. 2 mit dem Kommunikations-Taktsystem und ferner dementsprechend mit dem Kommunikationszyklus 231. Problemlos ist es dabei möglich, den Systick 213 nicht mehr mit Hilfe eines Hardware-Timers zu generieren, sondern dafür einen Interrupt aus dem Kommunikationssystem 230 zu verwenden. Der Systick-Zeitpunkt sollte dabei frei im gesamten Kommunikations-Zyklus 231 gewählt werden können, um den besten Zeitpunkt bestimmen und auswählen zu können. Ebenfalls kann eine Untersetzung (Auslösung nur jedes n-te Mal) sinnvoll sein, um unterschiedliche Zykluszeiten (ganzzahlige Teiler) für den Kommunikationszyklus 231 und den Betriebssystem-Systick 213 wählen zu können.

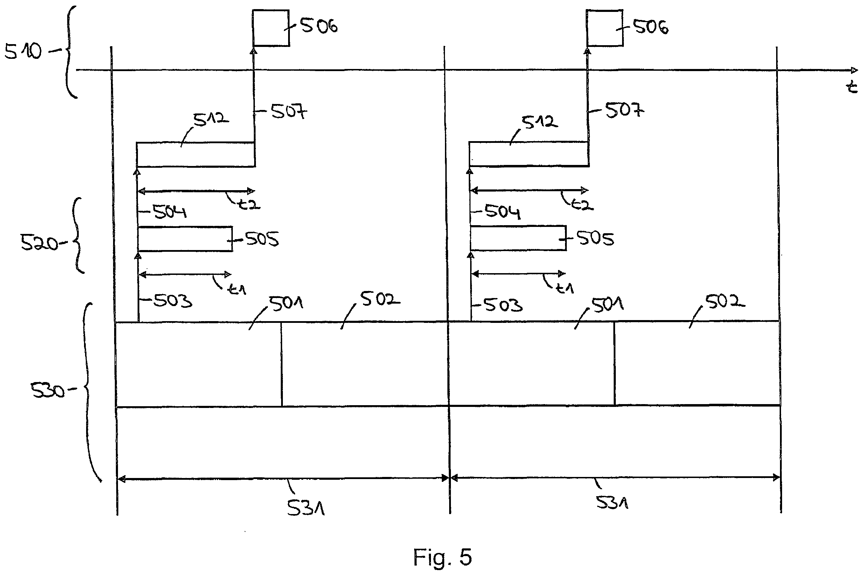

Sind diese Einstellungen nicht so einfach möglich, da nicht ausreichend unterschiedliche Interrupts direkt aus dem Kommunikationssystem 230 generiert werden können, kann auch ein Hardware-Timer 512, in Fig. 5 dargestellt, mit nicht synchronisiertem Taktsystem verwendet werden. Der Hardware-Timer 512 kann dann im sogenannten Single-Shot-Modus betrieben werden, d.h. der Hardware-Timer 512 erzeugt keinen zyklischen Interrupt mehr. Der Hardware-Timer 512 wird stattdessen einmal mit einer Zeitdauer t2 programmiert und gestartet. Nach dem Ablauf der Dauer t2 wird dann einmalig ein Interrupt 507 vom Hardware-Timer 512 ausgelöst, wie in Fig. 5 dargestellt. Eine Programmierung und der Start des Hardware-Timers 512 erfolgen im Service-Thread des Kommunikations-Interrupts 223, der für die Abarbeitung des synchronisierten SPS-Programms 222 sorgt. Somit kann auch hier der Zeitpunkt im Kommunikationszyklus 231 frei bestimmt werden. Eine Untersetzung ist ebenfalls realisierbar, indem nur jedes n-te Mal im IRQ-Service-Thread der Hardware-Timer 512 programmiert und gestartet wird.

Bei dem erfindungsgemäßen Verfahren unter Verwendung eines Hardware-Timers 512 sollte mit einer etwas größeren Ungenauigkeit des so generierten IRQ gerechnet werden, da das Basis-Taktsystem des Hardware-Timers 512 nach wie vor nicht synchronisiert ist. Dennoch kann ein kontinuierliches Driften ausgeschlossen werden, da der Hardware-Timer 512 immer wieder erneut zu einem synchronisierten Zeitpunkt gestartet wird. Das unsynchronisierte Taktsystem des Hardware-Timers 512 beeinflusst lediglich noch die programmierte Dauer des Hardware-Timers 512 selbst. Eine Optimierung lässt sich hier zusätzlich erreichen, indem die reale Dauer t2, dargestellt in Fig. 5, gemessen wird und die Programmierung des Hardware-Timers 512 entsprechend korrigiert wird.

Mit dem vorgeschlagenen Verfahren lassen sich Jitter verringern oder sogar ganz vermeiden, die von dem zyklischen Aufruf des Betriebssystem-Schedulers stammen. Die Zeitpunkte driften nicht mehr gegeneinander, wodurch ein definiertes zeitliches Zusammenspiel gewährleistet ist.

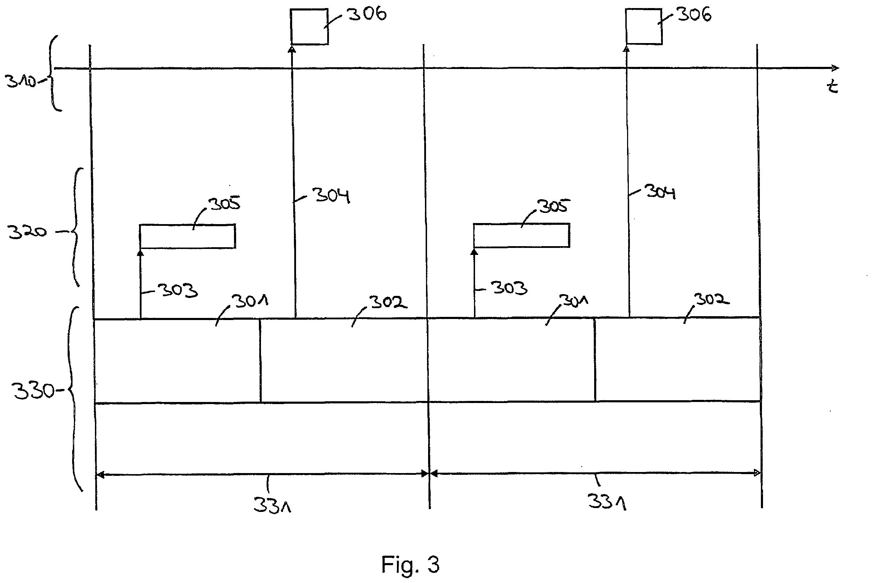

Es kann in Fig. 2 vorgesehen werden, dass bei der Automatisierungseinrichtung 200 der erste Systemtakt und der zweite Systemtakt von dem Kommunikationssystem 230 abgeleitet wird. Hierzu werden in den Fig. 3 bis 5 nähere Ausführungsbeispiele gegeben. Es werden die Begriffe Anwendung und Applikation im Folgenden synonym verwendet und sind daher austauschbar.

Es wird in dem Ausführungsbeispiel der Fig. 2, im Gegensatz zum Ausführungsbeispiel der Fig. 1, ein synchronisierter Betrieb angestrebt, so dass ein Systemtakt des Betriebssystems 210 mit einem Systemtakt des Kommunikationssystems 230 synchronisiert ist. Ebenso wie in Fig. 1 weist das Betriebssystem 210 der Fig. 2 einen Scheduler 211 auf, der in regelmäßigen Abständen einen Interrupt 214 generieren kann, so dass ein Systemzyklus 213 des Betriebssystems 210 entsteht. Auch weist, wie in Fig. 1, ein Kommunikationszyklus 231 vier gleich lange Zeitblöcke 232, 233, 234, 235 auf, die jeweils einen oder mehrere Interrupts 223 generieren können. Der Interrupt 223 kann eine Anwendung oder Applikation 222, wie ein SPS-Programm starten. Insgesamt bilden die vier Zeitblöcke 232, 233, 234, 235 den Kommunikationszyklus 231. Im Unterschied zu Fig. 1 ist nun in Fig. 2 das Betriebssystem 210 mit dem Kommunikationssystem 230 synchronisiert. Eine solche Synchronisation bedeutet, dass das Betriebssystem 210 und das Kommunikationssystem 230 zeitlich aufeinander abgestimmt sind, indem beide Systeme beispielsweise eine gemeinsame Taktquelle verwenden. So wird beispielsweise ein freilaufender Hardware-Timer 112, wie in Fig. 1 dargestellt, der auf den Scheduler 111 einwirkt, in dem Ausführungsbeispiel der Fig. 2 in Bezug auf den Scheduler 211 nicht mehr verwendet. Als freilaufender Hardware-Timer wird ein Zeitgeber verstanden, der in Form von Hardware bereitgestellt wird und selbständig ohne Steuerung oder Synchronisierung von außen arbeitet. Vielmehr wird erfindungsgemäß das Kommunikationssystem 230 selbst als Taktquelle für das Betriebssystem 210 verwendet. Hierzu zeigen die folgenden Fig. 3 bis 5 verschiedene Ausführungsformen für die Realisierung einer Synchronisation. In Fig. 5 ist zwar ein Hardware-Timer 512 vorgesehen, dieser Hardware-Timer 512 wird jedoch gesteuert und ausgelöst von Software, die ihrerseits von einem Takt des Kommunikationssystems gesteuert wird.

In Fig. 3 ist eine erste Alternative zur Synchronisation dargestellt, bei der jeweils ein Zeitblock 301, 302 des Kommunikationssystems 330 einen Interrupt 303, 304 auslösen kann, wobei der erste Interrupt 303 des ersten Blocks 301 zum Starten einer Applikation 305 verwendet wird, während der zweite Interrupt 304 des zweiten Zeitblocks 302 zum Starten des Schedulers 306 auf der Betriebssystemebene 310 verwendet wird. Aus Fig. 3 ist erkennbar, dass abwechselnd jeweils der erste Interrupt 303 und der zweite Interrupt 304 auf verschiedene Systemebenen zugreifen, nämlich der Interrupt 303 auf die Applikationsebene 320 und der Interrupt 304 auf die Betriebssystemebene 310. Der erste Interrupt 303 und der zweite Interrupt 304 werden jeweils aus einem Systemtakt des Kommunikationssystems 330 generiert. In Fig. 3 weist ein Kommunikationszyklus 331 zwei gleich lange Zeitblöcke 301, 302 auf, die jeweils einen oder mehrere Interrupts 303, 304 generieren können. Aus jeweils einem der Zeitblöcke 301, 302 wird sowohl der erste Interrupt 303 wie auch der zweite Interrupt 304 von dem Kommunikationssystem 330 breitgestellt. Der erste Interrupt 303 wird für die Anwendung 305 bereitgestellt und der zweite Interrupt 304 wird für das Betriebssystem 310 bereitgestellt.

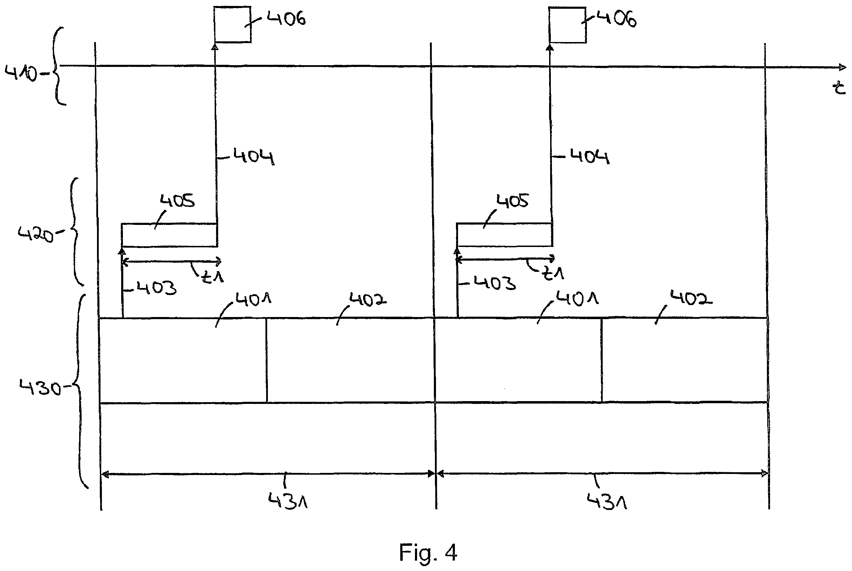

Fig. 4 zeigt eine zweite Alternative, wie eine Synchronisation zwischen einem Kommunikationssystem 430 und einem Betriebssystem 410 bereitgestellt werden kann. Hierbei wird durch den Start des Kommunikationszyklus 431 ein Kommunikations-Interrupt 403 gestartet, der eine Applikation, wie ein SPS-Programm 405, oder einen Service-Thread in der Applikationsebene 420 mit der Zeitdauer t1 auslöst. Am Ende der Zeitdauer t1, also am Ende der Applikation 405, wird ein zweiter Interrupt 404 generiert. Der erste Interrupt 403 wird aus einem Systemtakt des Kommunikationssystems 430 generiert und der zweite Interrupt 404, der auf das Betriebssystem 410 wirkt, wird aus der Applikation 405 heraus generiert. Hierbei wird der zweite Interrupt 404 von der Applikation 405 für das Betriebssystem 410 bereitgestellt, indem die Anwendung 405 direkt den zweiten Interrupt an den Scheduler 406 leitet.In Fig. 4 weist ein Kommunikationszyklus 431 zwei gleich lange Zeitblöcke 401, 402 auf, die jeweils einen oder mehrere Interrupts 403 generieren können.

Es wird in dem Ausführungsbeispiel der Fig. 4 sichergestellt, dass keine Kollisionen von Interrupts innerhalb der Automatisierungseinrichtung 200 der Fig. 2 entstehen können, da zunächst das SPS-Programm 405 abgearbeitet wird, bevor ein weiterer Interrupt 404 auf Betriebssystemebene 410 aktiviert wird. Die Ausführungsform der Fig. 4 kann jedoch gewisse zeitliche Schwankungen hervorrufen, da je nach Applikation die Zeitdauer t1 variiert. Auf diese Weise können Jitter 124 verringert werden, jedoch eventuell nicht völlig ausgeschlossen werden. Für eine verbesserte Ausführungsform zur Vermeidung einer Auswirkung von variablen Applikationslängen auf das Betriebssystem 410 wird in Fig. 5 eine weitere Alternative bereitgestellt.

Die Automatisierungseinrichtung 200 der Fig. 2 kann einen Hardware-Zeitgeber oder Hardware-Timer 512 aufweisen, der in dem Ausführungsbeispiel der Fig. 5 dargestellt ist. Der Hardware-Timer 512 wird für die Synchronisation des ersten Systemtakts und des zweiten Systemtakts verwendet. Wie für Fig. 4 beschrieben, startet ein Interrupt 503 des Kommunikationssystems 530 eine Applikation als SPS-Programm 505 der Länge t1 in der Applikationsebene 520. Innerhalb des SPS-Programms 505 wird ein weiterer Interrupt 504 generiert, der den Hardware-Timer 512 startet, so dass dieser eine Zeitdauer t2 vergehen lässt, bevor ein weiterer Interrupt 507 generiert wird, der in der Betriebssystemebene 510 verwendet wird. Der zweite Interrupt 504 zum Starten den Hardware-Timers 504 geschieht in Fig. 5 fast zeitgleich mit dem ersten Interrupt 503, der das Kommunikationssystem 130 generiert. Der zweite Interrupt 504 kann jedoch auch deutlich zeitlich versetzt vom ersten generierten Interrupt 503 erfolgen. Die Zeitdauer t2 des Hardware-Timers 512 ist frei wählbar, so dass sichergestellt werden kann, dass das SPS-Programm 505 in der Applikationsebene 520 mit der Länge t1 mindestens abgeschlossen ist, bevor der zweite Interrupt 507 für einen Scheduler 506 im Betriebssystem 510 generiert wird. Es gelingt hierbei, dass zwischen dem Ende des SPS-Programms 505 in der Applikationsebene 520 und dem zeitlichen Einsetzen des Interrupts 507, generiert durch den Hardware-Timer 512, eine Zeitspanne t2 vergeht. Diese Zeitspanne t2 kann als Puffer gesehen werden, der Sicherheit gibt, dass keine Unregelmäßigkeiten bei der Auslösung des Interrupts 507 für das Betriebssystem 510 entstehen. Der Hardware-Timer 512 der Fig. 5 hat die Funktion einer Verzögerungsvorrichtung. Ferner kann der Hardware-Timer 512 im Single-Shot-Modus betrieben werden. Mit Vorteil wird der Hardware-Zeitgeber 512 in einem ersten Drittel der Zeitdauer t1 der Anwendung 505 gestartet. Dies verbessert weiter die Stabilität des Betriebssystems 510 und verringert die Wahrscheinlichkeit, dass eine Applikation 505 noch nicht beendet ist, bevor ein weiterer Interrupt generiert wird, beispielsweise innerhalb des Zeitblocks 502 des Kommunikationszyklus 531.

Mit dem Ausführungsbeispiel der Fig. 5 wird eine Lösung bereitgestellt, die verschiedene Zeitlängen t1 einer Applikation 505 erlaubt, ohne dass in dem Betriebssystem 510 Schwankungen entstehen. Der Hardware-Timer 512 dient hierbei als Puffer und sorgt für konstante Zeitintervalle zur Auslösung eines Betriebssystems-Interrupts 507. Bei dieser Ausführungsform sind Jitter 124, wie in Fig. 1 dargestellte, sehr unwahrscheinlich, so lange die Zeitdauer t2 so gewählt wird, dass sie mindestens zeitlich nach der Beendigung des SPS-Programms 505 der Zeitdauer t1 endet. Hierbei weist in Fig. 5 ein Kommunikationszyklus 531 zwei gleich lange Zeitblöcke 501, 502 auf, die jeweils einen oder mehrere Interrupts 503 generieren können.

Es kann gemäß der Ausführungsbeispiele der Fig. 2 bis 5 vorgesehen werden, dass der Zeitpunkt eines Interrupts 303, 403, 503 im gesamten Kommunikationszyklus 331, 431, 531 frei wählbar ist. Hierbei kann der Zeitpunkt des Interrupts gezielt gewählt wird, so dass keine Kollisionen oder Verdrängungen mit weiteren Interrupts des Betriebssystems entstehen. Ferner kann bei allen Ausführungsbeispielen vorgesehen werden, dass bei der Synchronisation eine Untersetzung in Bezug auf den zweiten Systemtakt im Verhältnis zum ersten Systemtakt vorgesehen ist, wie bereits in Fig. 2 angedeutet wurde.

Beispielhaft wurde hier die Synchronisation eines SPS-Programms 222 mit einem Kommunikationssystem 230 beschrieben. Die Synchronisation kann nach den gleichen Prinzipien auch mit anderen Systemen erfolgen, wie beispielsweise einem Motion-Kernel.

Ferner kann vorgesehen werden, dass eine Mehrzahl von Kommunikationssystemen vorhanden ist, die jeweils einen zweiten Systemtakt aufweisen, wobei jeweils die zweiten Systemtakte mit dem ersten Systemtakt eines gemeinsamen Betriebssystems synchronisiert werden, so dass jeder der zweiten Systemtakte mit dem ersten Systemtakt synchronisiert ist. Nach dem gleichen Verfahren kann prinzipiell eine beliebige Anzahl von Systemen, zum Beispiel mehrere Echtzeit-Kommunikationssysteme, Motion-Kernel und eine oder mehrere SPS-Applikationen gleichzeitig mit dem Echtzeit-Betriebssystem 210 synchronisiert werden. Der Betriebssystem-Systick und alle anderen Zeitpunkte werden, wie erläutert, aus einem Taktsystem abgeleitet, um ein definiertes zeitliches Zusammenwirken zu gewährleisten. Um mögliche Jitter zu vermeiden, ist es erforderlich die notwendigen Zeitpunkte (Interrupts) so geschickt auszuwählen, dass bei den echtzeitrelevanten Elementen in der Automatisierungseinrichtung 200 möglichst keine Verdrängung oder Unterbrechung untereinander sowie durch den Betriebssystem-Systick entstehen.

Die Ausführungsbeispiele der Fig. 2 bis 5 können auch im Rahmen des Erfindungsgedankens kombiniert werden. So ist beispielsweise in den Fig. 3 bis 5 möglich, mehr als zwei Zeitblöcke innerhalb eines Kommunikationszyklus vorzusehen. Ferner können mit einer Automatisierungsvorrichtung mehrere der Alternativen der Fig. 3 bis 5 gleichzeitig einzeln verwirklicht werden, beispielsweise durch Umschalten in verschiedene Betriebsmodi. Auch ist möglich, dass die unterschiedlichen Alternativen innerhalb einer Betriebsart kombiniert werden, so dass beispielsweise nur in jedem zweiten Kommunikationszyklus ein Hardware-Zeitgeber 512 gemäß Fig. 5 eingesetzt wird und bei jedem dazwischen liegenden Kommunikationszyklus eines der Varianten der Fig. 3 oder Fig. 4 Anwendung findet.

## Patentansprüche

1. Automatisierungseinrichtung (200) aufweisend mehrere Ebenen der Kommunikation mit einem Betriebssystem (210, 310, 410, 510) als höchste Ebene mit einem ersten Systemtakt zur Ansteuerung eines Systemzeitzyklus (213) des Betriebssystems (210, 310, 410, 510) und
einem Kommunikationssystem (230, 330, 430, 530) als weitere Ebene mit einem zweiten Systemtakt zur Ansteuerung eines Systemzeitzyklus (231) des Kommunikationssystems (230, 330, 430, 530),
wobei der erste Systemtakt und der zweite Systemtakt zeitlich synchronisiert sind,
**dadurch gekennzeichnet, dass**
die Automatisierungseinrichtung (200) ferner zwischen der Ebene des Betriebssystems (210, 310, 410, 510) und der Ebene des Kommunikationssystems (230, 330, 430, 530) eine Anwendungsebene (220, 320, 420, 520) aufweist, wobei ein erster Interrupt (303, 403, 503) des Kommunikationssystems zum Starten einer ersten Anwendung (305, 405, 505) in der Anwendungsebene (320, 420, 520) und ein zweiter Interrupt (304, 404, 507) zum Starten eines Schedulers (306, 406, 506) des Betriebssystems (210, 310, 410, 510) eingerichtet und ausgebildet ist.

2. Automatisierungseinrichtung nach Anspruch 1, wobei das Betriebssystem (210, 310, 410, 510) ein Echtzeit-Betriebssystem ist.

3. Automatisierungseinrichtung nach Anspruch 1 oder Anspruch 2, wobei der erste Systemtakt und der zweite Systemtakt von dem Kommunikationssystem (230, 330, 430, 530) abgeleitet ist.

4. Automatisierungseinrichtung nach einem der Ansprüche 1 bis 3, wobei der erste Interrupt (303, 403, 503) von dem Kommunikationssystem (230, 330, 430, 530) bereitgestellt ist und der zweite Interrupt (304, 404, 507) von dem Kommunikationssystem (230, 330) oder von der ersten Anwendung (405, 505) oder von einer zweiten Anwendung (512) für das Betriebssystem (210, 310, 410, 510) bereitgestellt ist.

5. Automatisierungseinrichtung nach Anspruch 3, wobei bei einer Bereitstellung des zweiten Interrupts (304) von dem Kommunikationssystem (330) der erste Interrupt (303) zum Auslösen in einem ersten Zeitblock (301) des Kommunikationssystems (330) und der zweite Interrupt (304) zum Auslösen in einem zweiten Zeitblock (302) des Kommunikationssystems (330) eingerichtet ist, wobei der erste Zeitblock (301) und der zweite Zeitblock (302) zusammen den Systemzeitzyklus (231, 331) des Kommunikationssystems (230, 330) bilden.

6. Automatisierungseinrichtung nach Anspruch 4, wobei die erste Anwendung (405, 505) eine Bewegungssteuerung oder eine SPS-Steuerung ist.

7. Automatisierungseinrichtung nach einem der Ansprüche 1 bis 6, wobei der Zeitpunkt des ersten Interrupts (303, 403, 503) im gesamten Kommunikationszyklus (331, 431, 531) frei wählbar ist.

8. Automatisierungseinrichtung nach einem der Ansprüche 1 bis 7, wobei bei der Synchronisation eine Untersetzung in Bezug auf den zweiten Systemtakt im Verhältnis zum ersten Systemtakt vorgesehen ist.

9. Automatisierungseinrichtung nach einem der Ansprüche 1 bis 8, wobei die Automatisierungseinrichtung (200) eine Mehrzahl von Kommunikationssystemen aufweist, die jeweils einen zweiten Systemtakt aufweisen, wobei jeweils die zweiten Systemtakte mit dem ersten Systemtakt eines gemeinsamen Betriebssystems (210, 310, 410, 510) synchronisiert werden, so dass jeder der zweiten Systemtakte mit dem ersten Systemtakt synchronisiert ist.

10. Automatisierungseinrichtung nach einem der Ansprüche 1 bis 9, wobei die Automatisierungseinrichtung einen Hardware-Zeitgeber (512) aufweist, der für die Synchronisation des ersten Systemtakts und des zweiten Systemtakts verwendet wird.

11. Automatisierungseinrichtung nach Anspruch 10, wobei der Hardware-Zeitgeber (512) im Single-Shot-Modus betrieben wird und/oder wobei der Hardware-Zeitgeber (512) in einem ersten Drittel der Zeitdauer der ersten Anwendung (505) gestartet wird.

12. Verfahren zum Betreiben einer Automatisierungseinrichtung (200) umfassend mehrere Ebenen der Kommunikation mit einem Betriebssystem (210, 310, 410, 510) als höchste Ebene und einem Kommunikationssystem (230, 330, 430, 530) als weitere Ebene, wobei das Verfahren aufweist:
Bereitstellen eines ersten Systemtakts, der einen Arbeitstakt des Betriebssystems (210, 310, 410, 510) vorgibt;
Bereitstellen eines zweiten Systemtakts, der einen Arbeitstakt des Kommunikationssystems (230, 330, 430, 530) vorgibt;
Synchronisieren des ersten Systemtakts und des zweiten Systemtakts,
**gekennzeichnet durch**
Bereitstellen einer Anwendungsebene (220, 320, 420, 520) zwischen der Ebene des Betriebssystems (210, 310, 410, 510) und der Ebene des Kommunikationssystems (230, 330, 430, 530); und
Verwenden eines ersten Interrupts (303, 403, 503) des Kommunikationssystems zum Starten einer ersten Anwendung (305, 405, 505) in der Anwendungsebene (320, 420, 520); und
Verwenden eines zweiten Interrupts (304, 404, 507) zum Starten eines Schedulers (306, 406, 506) des Betriebssystems (210, 310, 410, 510).

## Claims

1. Automation device (200), comprising:
several levels of communication,
with an operating system (210, 310, 410, 510) being the highest level having a first system clock for controlling a system time cycle (213) of the operating system (210, 310, 410, 510) and
a communication system (230, 330, 430, 530) being a further level having a second system clock for controlling a system time cycle (231) of the communication system (230, 330, 430, 530);
wherein the first system clock and the second system clock are synchronized in time,
**characterized in that**
the automation device (200) furthermore comprises an application level (220, 320, 420, 520) being between the level of the operating system (210, 310, 410, 510) and the level of the communication system (230, 330, 430, 530), wherein a first interrupt (303, 403, 503) of the communication system is configured and designed to start a first application (305, 405, 505) in the application level (220, 320, 420, 520) and a second interrupt (304, 404, 507) is configured and designed to start a scheduler (306, 406, 506) of the operating system (210, 310, 410, 510).

2. Automation device as claimed in claim 1, wherein the operating system (210, 310, 410, 510) is a real-time operating system.

3. Automation device as claimed in claim 1 or claim 2, wherein the first system clock and the second system clock are derivable from the communication system (230, 330, 430, 530) .

4. Automation device as claimed in any of claims 1 to 3, wherein the first interrupt (303, 403, 503) is provided by the communication system (230, 330, 430, 530) and the second interrupt (304, 404, 504) is provided by the communication system (230, 330) by an second application (405, 505) to the operating system (210, 310, 410, 510) .

5. Automation device as claimed in claim 3, wherein in case of provision of the second interrupt (304) by the communication system (330), the first interrupt (303) is set to trigger in a first time block (301) of the communication system (330) and the second interrupt (304) is set to trigger in a second time block (302) of the communication system (330), wherein the first time block (301) and the second time block (302) form together the system time cycle (231, 331) of the communication system (230), 330).

6. Automation device as claimed in claim 4, wherein the first application (405, 505) is a motion control or PLC control application.

7. Automation device as claimed in any of claims 1 to 6, wherein the timing of the first interrupt (303, 403, 503) is freely selectable in the entire communication cycle (331, 431, 531).

8. Automation device as claimed in any of claims 1 to 7, wherein the synchronization includes a reduction with respect to the second system clock relative to the first system clock.

9. Automation device as claimed in any of claims 1 to 8, wherein the automation device (200) comprises a plurality of communication systems, each of which has a second system clock, and wherein each of the second system clocks is synchronized with the first system clock of a common operating system (210, 310, 410, 510), so that each of the second system clocks is synchronized with the first system clock.

10. Automation device as claimed in any of claims 1 to 9, wherein the automation device comprises a hardware timer (512) which can be employed for synchronizing the first system clock and the second system clock.

11. Automation device as claimed in claim 10, wherein the hardware timer (512) is operable in single shot mode and/or wherein the hardware timer (512) is started in a first third of the time period of the first application (505) .

12. Method of operating an automation device (200) which comprises several levels of communication, having an operating system (210, 310, 410, 510)as highest level and a communication system (230, 330, 430, 530) as a further level, the method comprising:
providing a first system clock which defines an operating cycle of the operating system (210, 310, 410, 510) ;
providing a second system clock which defines an operating cycle of the communication system (230, 330, 430, 530); and
synchronizing the first system clock and the second system clock,
**characterized by**
providing an application level (220, 320, 420, 520) being between the level of the operating system (210, 310, 410, 510) and the level of the communication system (230, 330, 430, 530), and
using a first interrupt (303, 403, 503) of the communication system to start a first application (305, 405, 505) in the application level (320, 420, 520); and
using a second interrupt (304, 404, 507) to start a scheduler (306, 406, 506) of the operating system (210, 310, 410, 510) .

## Revendications

1. Dispositif d'automatisation (200) comprenant plusieurs niveaux de communication avec un système d'exploitation (210, 310, 410, 510) en tant que niveau le plus élevé avec une première cadence de système pour le contrôle d'un cycle temporel de système (213) du système d'exploitation (210, 310, 410, 510) et
un système de communication (230, 330, 430, 530) en tant que niveau supplémentaire avec une deuxième cadence de système pour le contrôle d'un cycle temporel de système (231) du système de communication (230, 330, 430, 530),
dans lequel la première cadence de système et la deuxième cadence de système sont synchronisées de manière temporelle,
le dispositif d'automatisation (200) étant **caractérisé en ce qu'**il comprend en outre, entre le niveau du système d'exploitation (210, 310, 410, 510) et le niveau du système de communication (230, 330, 430, 530), un niveau d'application (220, 320, 420, 520), où une première interruption (303, 403, 503) du système de communication est configurée et conçue pour le démarrage d'une première application (305, 405, 505) dans le niveau d'application (320, 420, 520) et une deuxième interruption (304, 404, 507) pour le démarrage d'un planificateur (306, 406, 506) du système d'exploitation (210, 310, 410, 510).

2. Dispositif d'automatisation selon la revendication 1, dans lequel le système d'exploitation (210, 310, 410, 510)est un système d'exploitation en temps réel.

3. Dispositif d'automatisation selon la revendication 1 ou la revendication 2, dans lequel la première cadence du système et la deuxième cadence du système sont déduites par le système de communication (230, 330, 430, 530).

4. Dispositif d'automatisation selon l'une des revendications 1 à 3, dans lequel la première interruption (303, 403, 503) est mise à disposition par le système de communication (230, 330, 430, 530) et la deuxième interruption (304, 404, 507) est mise à disposition par le système de communication (230, 330) ou par la première application (405, 505) ou par une deuxième application (512) pour le système d'exploitation (210, 310, 410, 510).

5. Dispositif d'automatisation selon la revendication 3, dans lequel, lors d'une mise à disposition de la deuxième interruption (304) par le système de communication (330), la première interruption (303) est configurée pour le déclenchement, dans un premier bloc temporel (301), du système de communication (330) et la deuxième interruption (304) est configurée pour le déclenchement, dans un deuxième bloc temporel (302), du système de communication (330), où le premier bloc temporel (301) et le deuxième bloc temporel (302) constituent ensemble le cycle temporel (231, 331) du système de communication (230, 330).

6. Dispositif d'automatisation selon la revendication 4, dans lequel la première application (405, 505) est une commande de mouvement ou une commande API.

7. Dispositif d'automatisation selon l'une des revendications 1 à 6, dans lequel le moment de la première interruption (303, 403, 503) peut être choisi librement dans tout le cycle de communication (331, 431, 531).

8. Dispositif d'automatisation selon l'une des revendications 1 à 7, dans lequel, lors de la synchronisation, une démultiplication vis-à-vis de la deuxième cadence du système par rapport à la première cadence du système est prévue.

9. Dispositif d'automatisation selon l'une des revendications 1 à 8, où le dispositif d'automatisation (200) comprend une pluralité de systèmes de communication qui comprennent chacun une deuxième cadence de système, où les deuxièmes cadences de systèmes sont synchronisées avec la première cadence d'un système d'exploitation commun (210, 310, 410, 510), de façon à ce que chacune des deuxièmes cadences de systèmes soit synchronisée avec la première cadence de système.

10. Dispositif d'automatisation selon l'une des revendications 1 à 9, où le dispositif d'automatisation comprend un temporisateur matériel (512) qui est utilisé pour la synchronisation de la première cadence du système et de la deuxième cadence du système.

11. Dispositif d'automatisation selon la revendication 10, dans lequel le temporisateur matériel (512) fonctionnement en mode « single shot » et/ou dans lequel le temporisateur matériel (512) est démarré dans un premier tiers de la durée de la première application (505).

12. Procédé d'exploitation d'un dispositif d'automatisation (200) comprenant plusieurs niveaux de communication avec un système d'exploitation (210, 310, 410, 510)en tant que niveau le plus élevé et un système de communication (230, 330, 430, 530) en tant que niveau supplémentaire, où le procédé comprend :
la mise à disposition d'une première cadence de système qui impose une cadence de travail du système d'exploitation (210, 310, 410, 510) ;
la mise à disposition d'une deuxième cadence de travail, qui impose une cadence de travail du système de communication (230, 330, 430, 530) ;
la synchronisation de la première cadence de système et de la deuxième cadence de système,
**caractérisé par**
la mise à disposition d'un niveau d'application (220, 320, 420, 520) entre le niveau du système d'exploitation (210, 310, 410, 510) et le niveau du système de communication (230, 330, 430, 530) ; et
l'utilisation d'une première interruption (303, 403, 503) du système de communication pour le démarrage d'une première application (305, 405, 505) dans le niveau d'application (320, 420, 520) ; et
l'utilisation d'une deuxième interruption (304, 404, 507) pour le démarrage d'un planificateur (306, 406, 506) du système d'exploitation (210, 310, 410, 510).
